(19) **Europäisches Patentamt**

**European Patent Office**

**Office européen des brevets**

(11) **EP 0 665 822 B2**

(12) **NOUVEAU FASCICULE DE BREVET EUROPEEN**

(45) Date de publication et mention de la décision concernant l'opposition:
**24.09.2003 Bulletin 2003/39**

(45) Mention de la délivrance du brevet:
**10.07.1996 Bulletin 1996/28**

(21) Numéro de dépôt: **93924101.4**

(22) Date de dépôt: **21.10.1993**

(51) Int Cl.$^7$: **C03C 3/085**, C03C 3/091, C03C 21/00

(86) Numéro de dépôt international:
**PCT/FR93/01035**

(87) Numéro de publication internationale:
**WO 94/008910 (28.04.1994 Gazette 1994/10)**

(54) **VITRAGE TREMPE CHIMIQUE**

CHEMISCH VORGESPANNTES GLAS

CHEMICALLY TOUGHENED GLASS

(84) Etats contractants désignés:
**BE DE ES FR GB IT LU**

(30) Priorité: **22.10.1992 FR 9212637**

(43) Date de publication de la demande:
**09.08.1995 Bulletin 1995/32**

(73) Titulaire: **SAINT-GOBAIN GLASS FRANCE**
**92400 Courbevoie (FR)**

(72) Inventeurs:
- **CHARRUE, Hervé**
  **F-92500 Rueil-Malmaison (FR)**
- **GUILLEMET, Claude**
  **F-92270 Bois-Colombes (FR)**
- **CREPET, Renée**
  **F-93420 Villepinte (FR)**
- **RIFQI, Françoise**
  **F-75017 Paris (FR)**

(74) Mandataire: **Breton, Jean-Claude et al**
**SAINT-GOBAIN RECHERCHE**
**39, quai Lucien Lefranc**
**93300 Aubervilliers Cedex (FR)**

(56) Documents cités:
DE-B- 2 034 393          FR-A- 2 128 031
GB-A- 2 171 990          US-A- 3 798 013

- **IEEE JOURNAL OF QUANTUM ELECTRONICS, vol.OE-22, no.6, Juin 1986, NEW YORK US pages 892 - 895 J.E. GORTYCH ET AL 'Fabrication of Planar Optical Waveguides by K+ - Ion Exchange in BK7 and Pyrex Glass.'**
- **JOURNAL OF NON-CRYSTALLINE SOLIDS., vol.19, Décembre 1975, AMSTERDAM NL pages 213 - 220 J.S. SIEGER 'Chemical Characteristics of Float Glass Surfaces.'**
- **JOURNAL OF NON-CRYSTALLINE SOLIDS., vol.38&39, Juin 1980, AMSTERDAM NL pages 749 - 754 W.E. BAITINGER ET AL 'Characterization of Tin in the Bottom Surface of Float Glass by Ellipsometry and XPS.'**
- **J.Am.Ceram.Soc. 70(3), p. 86-89 (1987)**

Remarques:
Le dossier contient des informations techniques présentées postérieurement au dépôt de la demande et ne figurant pas dans le présent fascicule.

## Description

L'invention concerne des vitrages trempés chimiques, c'est-à-dire dont la surface a été mise en compression par échanges d'ions alcalins. Plus précisément, l'invention concerne des vitrages présentant des contraintes de compression élevées sur une grande profondeur et destinés plus particulièrement aux applications aéronautiques.

Pour les applications aéronautiques, notamment les vitrages avions ou hélicoptères, les exigences en matière de résistance mécanique sont telles qu'il est généralement procédé à une opération de renforcement par voie chimique et non simplement par voie thermique comme il est usuel, par exemple, pour les vitrages automobiles. La trempe chimique peut aussi être utilisée pour d'autres applications très exigeantes, telles que les vitrages pour véhicules blindés, ferroviaires ou maritimes.

Comme dans le cas d'une trempe thermique, une trempe chimique consiste à mettre la surface du verre en compression, la résistance à la rupture du verre étant accrue d'une valeur sensiblement identique à l'intensité de la contrainte de compression superficielle générée par le traitement, en l'ocurrence générée par la substitution d'une partie des ions alcalins des couches superficielles du verre par d'autres ions plus encombrants qui viennent s'insérer dans le réseau vitreux.

Pour des sollicitations exercées sur la totalité du vitrage, à l'exemple de la pression exercée par l'air d'une cabine de pilotage pressurisée, la qualité du renforcement mécanique est essentiellement dictée par la valeur de la contrainte de compression superficielle. Toutefois, pour des sollicitations plus dynamiques, par exemple le choc avec un oiseau, la profondeur traitée est tout aussi critique car l'impact engendre une sollicitation très élevée qui peut provoquer la casse du verre à partir d'une face en extension présentant des défauts de surface. Idéalement, l'opération de trempe chimique a ainsi pour objet de placer sous une contrainte de compression très élevée les couches superficielles de l'objet en verre traité, sur une profondeur très grande et au moins égale à celle du plus grand défaut possible.

Pour une composition verrière donnée, la profondeur échangée dépend de la durée du traitement d'échanges d'ions et/ou la température à laquelle celui-ci est réalisé. Toutefois, une élévation de la température entraîne une élévation de la vitesse de relaxation des contraintes et par conséquent des niveaux de contraintes de rupture bas. Trop prolonger le traitement aboutit de même à un degré de trempe non satisfaisant, les contraintes ayant alors le temps nécessaire pour se relaxer.

Ces considérations ont conduit à développer de nouvelles compositions verrières plus favorables aux échanges ioniques que les compositions de verre à vitre traditionnelle, et permettant notamment l'obtentin de profondeurs d'échange plus grandes pour des durées de traitement n'excédant pas quelques heures. C'est ainsi que la demande de brevet FR-A-2 128 031 propose des verres silico-sodiques, faisant appel à des oxydes couramment rencontrés dans des verres industriels classiques, répondant à la composition suivante, définie par ses pourcentages pondéraux :

| | |
|---|---|
| $SiO_2$ | 65,0 à 76,0 % |
| $Al_2O_3$ | 1,5 à 5,0% |
| MgO | 4,0 à 8,0 % |
| CaO | 0,0à 4,5% |
| $Na_2O$ | 10,0 à 18,0 % |
| $K_2O$ | 1,0 à 7,5 % |
| $B_2O_3$ | 0,0 à 4,0 % |

ces éléments représentant au moins 96 % du poids du verre et respectant en outre les pourcentages pondéraux $CaO/[CaO+MgO]$ compris entre 0 et 0,45 et $K_2O/[Na_2O+K_2O]$ entre 0,05 et 0,35 - ces limites étant incluses.

Les compositions ci-dessus définies permettent d'obtenir après 24 heures une profondeur de renfort de 1,8 à 3,3 fois supérieure à la profondeur obtenue avec du verre à vitre ordinaire.

Toutefois, dans la demande de brevet FR-A-2 128 031, les échanges ioniques sont relativement brefs, systématiquement limités à des durées d'au plus 24 heures, ce qui permet d'atteindre au plus une épaisseur de la couche renforcée d'environ 100 microns (pour une température de traitement de 450°C). Or, pour les applications aéronautiques notamment, il est nécessaire que cette épaisseur soit bien supérieure et par exemple d'environ 300 microns, ce qui ramène au problème évoqué plus haut pour les compositions verrières traditionnelles.

De façon très surprenante, les auteurs de la présente invention ont trouvé qu'une telle composition verrière est également adaptée à des traitements longs, typiquement d'au moins 72 heures et notamment de plus de 10 jours ou encore plus de 15 jours, les traitements pouvant dépasser éventuellement la vingtaine de jours, et peut de ce fait être utilisée pour l'obtention d'objets en verre renforcés par échanges ioniques sur une profondeur grande, par exemple de 200 microns ou plus, tout en préservant des niveaux de renforcement très satisfaisants, par exemple avec des contraintes de compression superficielles d'au moins 400 MPa. L'invention a ainsi notamment pour objet des produits en verre dont la composition répond à la formulation connue du brevet FR 2 128 031 et qui ont subi un traitement de renforcement par échange ionique à une température telle que la contrainte de compression superficielle soit d'au moins 400 MPa et de préférence d'au moins 500 MPa, pour une profondeur nattée d'au moins 200 microns ou encore des objets dont la contrainte de compression superficielle est d'au moins 650 MPa pour une profondeur traitée d'au moins 75 microns.

A titre indicatif, le traitement effectué peut être par exemple de 18 jours à une température de 415 °C, ce qui conduit à des contraintes de compression superficielles d'environ 500 MPa, et une profondeur échangée d'environ 265 microns. Si l'application envisagée peut admettre des profondeurs de traitement moindres, il est aussi possible d'obtenir des niveaux de renforcement sensiblement supérieurs, avec des contraintes de compression superficielles par exemple d'environ 700 MPa ou plus, avec des traitements à basse température (par exemple 350 °C), pendant des durées sensiblement identiques au cas précédent, avec alors une profondeur de traitement d'environ 80 microns. Ainsi, les traitements de longue durée permettent toute une gamme de produits nouveaux dont les niveaux de renforcement sont relativement importants.

Un autre aspect des produits selon l'invention est celui de leur mode d'obtention. Dans la demande de brevet précitée, on précise que les verres répondant aux compositions spécifiques décrites peuvent être élaborés, affinés et formés dans les installations usuelles pour les verres silico-sodo-calciques. A la date de cette demande de brevet, cette expression "installations usuelles" ne s'appliquaient pas aux installations dites "float" dans lesquelles le verre est formé sur un bain d'étain fondu. Or, le procédé float est ajourd'hui le plus usité en raison de son caractère économique et de la très grande qualité optique des produits.

Pour l'homme de l'art, il est toujours délicat de modifier, même légèrement, une composition de verre float, car une telle installation représente des investissements considérables et est en pratique irréparable si la composition vient par exemple provoquer une usure accélérée des réfractaires. Par ailleurs, le ruban de verre float a par nature des faces asymétriques, une de ses faces principales étant en contact avec le bain d'étain fondu et l'autre avec l'atmosphère régnant au-dessus du bain ; de fait, la face "étain" est toujours plus ou moins enrichie par de l'étain qui diffuse au travers du verre, dont la concentration décroît à partir de la surface.

Il était à craindre que cette asymétrie des faces ait des effets fortement négatifs sur l'opération de renforcement par échange ionique et conduise à des niveaux de contraintes de compression superficielles très différents sur les deux faces principales du ruban de verre avec pour conséquence des défauts de planéité du vitrage.

De façon inattendue, il s'est avéré que ces problèmes ne se posaient pas ou du moins pas d'une manière telle qu'ils n'entravent totalement la production. D'une part, la composition verrière, malgré une teneur élevée en éléments volatils tels que le bore est compatible avec le procédé float et d'autre part, les faces étain et atmosphère ne se démarquent pas de manière sensible après l'opération de trempe chimique.

L'invention a donc également pour objet principal un vitrage obtenu sur un bain d'étain fondu puis renforcé par échange d'ions superficiel dont la matrice répond à une des compositions suivantes, exprimées en pourcentages pondéraux :

| | |
|---|---|
| $SiO_2$ | 65,0 à 76,0 % |
| $Al_2O_3$ | 1,5 à 5,0 % |
| $MgO$ | 4,0 à 8,0 % |
| $CaO$ | 0,0 à 4,5 % |
| $Na_2O$ | 10,0 à 18,0 % |
| $K_2O$ | 1,0 à 7,5 % |
| $B_2O_3$ | 0,0 à 4,0 % |

ces éléments représentant au moins 96 % du poids du verre et respectant en outre les pourcentages pondéraux CaO/[CaO+MgO]compris entre 0 et 0,45 et $K_2O$/[$Na_2O$-$K_2O$ entre 0,05 et 0,35 - ces limites étant incluses.

Un vitrage obtenu par le procédé float du ruban de verre flottant sur le bain d'étain fondu se différencie aisément des vitrages obtenus par d'autres procédés verriers en particulier par une teneur en oxyde d'étain, décroissante dans l'épaisseur, sur la face initialement en contact avec le bain d'étain. La teneur en oxyde d'étain peut être mesurée par exemple par micro-sonde électronique sur une profondeur de l'ordre de 10 microns. Dans la plupart des cas, cette teneur est comprise entre 1 et 5%, intégrée sur les 10 premiers microns en partant de la surface.

Autre facteur qui ne pouvait être présumé par l'homme de l'art, la relaxation des contraintes de compression qui se produit pour des traitements de trempe de plusieurs voire plusieurs dizaines de jours n'est pas telle qu'elle conduise à des niveaux de contraintes de compression superficielles insuffisants. Au contraire, il est possible d'obtenir des vitrages qui présentent après la trempe des niveaux de contraintes de compression au moins égaux à 400MPa ce qui convient pour les applications exigeantes envisagées.

Parmi les compositions selon l'invention, on retiendra plus spécialement celles qui présentent un domaine de formage autour de 1050-1150°C (rappelons que pour le procédé float, le domaine de formage correspond au domaine de températures pour lesquelles la viscosité du verre exprimée en poises est comprise entre 1585 (lgη = 3,2) et 5000 (lg η = 3,7). Sont de plus préférées les compositions qui correspondent à des verres à résistance hydrolitique très grande et de préférence inférieure à 20 si cette résistance est exprimée en fonction de la perte de poids. Il peut être en effet noté que les vitrages selon l'invention sont destinés à des applications d'un caractère exceptionnel, et qu'il est dès lors souhaitable de pouvoir espacer les campagnes de production, par exemple tous les cinq ans, en stockant les vitrages non trempés pour ne procéder au traitement de renforcement chimique que peu avant l'opération d'assemblage et l'achèvement du produit (pare-brise, hublots, etc....), tout en conservant bien sûr une qualité constante.

D'autres détails et caractéristiques avantageuses de l'invention ressortent de la comparaison faite ci-après entre des vitrages conformes à un mode de réalisation préféré de l'invention et des vitrages en verre "float" silico-calcique usuel.

Les matrices verrières utilisées répondent aux formulations suivantes (exprimées en pourcentages pondéraux):

|  | Verre témoin (A) | Verre selon l'invention |
|---|---|---|
| $SiO_2$ | 71,7 | 66,66 |
| $AlO_3$ | 0,6 | 4,59 |
| $MgO$ | 4 | 6,89 |
| $CaO$ | 9,5 | - |
| $Na_2O$ | 13,6 | 12,20 |
| $K_2O$ | - | 6,16 |
| $B_2O_3$ | - | 3,44 |
| Divers | 0,6 | 0,06 |
| lgη=3,2 | 1144°C | 1192°C |
| lgη=3,7 | 1062°C | 1100°C |

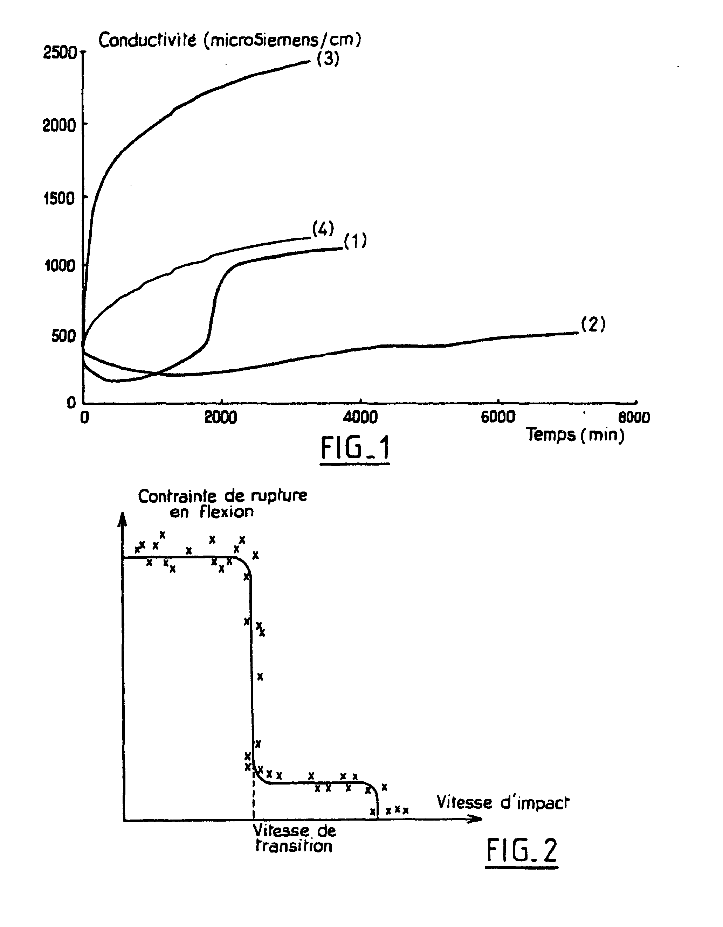

Les deux dernières lignes correspondent aux températures pour lesquelles la viscosité du matériau, exprimée en poises, est telle que leur logarithme décimal est respectivement égal à 3,2 et 3,7, ce qui correspond aux limites pour le procédé floaL On constate que le domaine de travail du verre selon l'invention est légèrement décalé vers les températures plus élevées mais reste très proche de celui du verre A ; en pratique, les modifications à effectuer sont donc minimes et ne posent pas de difficultés particulières. Après préparation, les verres sont broyés et placés dans de l'eau acidifiée dont on mesure la conductivité au cours du temps. Les résultats de ces mesures ont été reportés sur la figure 1 avec en ordonnée la valeur de la conductivité de l'eau (en microSiemens par cm) et en abscisse le temps (en minutes). Les courbes (1) et (2) correspondent respectivement au verre A et au verre B, sans traitement de trempe, les courbes (3) et (4) à ces mêmes verres après un renforcement par échange d'ions (9 jours dans un bain de nitrate de potassium à 460°C). Avec un verre non trempé selon l'invention, la conductivité croît très faiblement ce qui montre que ce verre présente une résistance hydrolitique bien supérieure à celle du verre témoin. Après la trempe, cette résistance hydrolitique reste forte et est relativement faible mais néanmoins bien supérieure à celle du verre témoin trempé bien que les profondeurs d'échange soient bien supérieures dans le cas du verre selon l'invention.

| Température de traitement | Durée (heures) | Contraintes de surface (MPa) | Profondeur (microns) |
|---|---|---|---|
| 440°C | 24 | 560-620 | 91 |
|  | 72 | 482-498 | 158 |
|  | 144 | 425-454 | 223 |
| 460°C | 24 | 467-481 | 121 |
|  | 72 | 400-444 | 210 |
|  | 216 | 338-352 | 363 |
| 415°C | 432 | 503 | 265 |
| 350°C | 408 | 706-736 | 85 |
| 425°C | 336 | 450 | 274 |

Le tableau ci-dessus démontre que la composition selon l'invention est particulièrement favorable aux échanges ioniques, dans un bain de nitrate de potassium. A titre comparatif, il est précisé que pour le verre A standard, on obtient après 48 heures à 440°C une contrainte de compression superficielle de 552 MPa, pour une profondeur échangée de 27 microns, et après 216 heures à 460°C, une contrainte de compression superficielle de 366 MPa pour une profondeur échangée de 78 microns.

Du tableau ci-dessus, il ressort clairement que le vitrage B permet d'obtenir des niveaux de contraintes de compression très élevés pour des profondeurs échangées exceptionnelles. La diminution prévisible des valeurs de résistance à la rupture est bien vérifiée au fur et à mesure qu'est accrue la durée du traitement mais cette diminution, due à un début de relaxation des contraintes n'est pas telle qu'elle conduise à des faibles niveaux. Au contraire, le niveau final des contraintes de compression superficielles est bien supérieur à celui atteint par le verre A (qui lui aussi se relaxe).

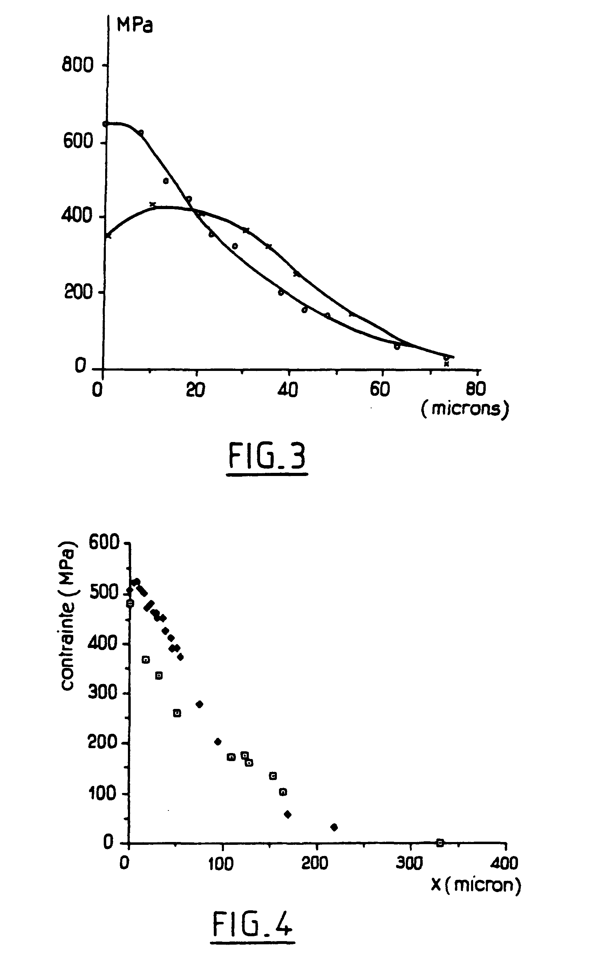

Les figures 3 et 4 annexées au présent mémoire illustrent un autre aspect remarquable des produits selon l'invention : le profil de renforcement en profondeur : l'abscisse correspond à la profondeur et l'ordonnée à la contrainte de compression à la profondeur considérée ; le point d'abscisse 0 correspond donc à la valeur de la contrainte superficielle de compression.

Figure 3 est représentée en 5, la courbe obtenue avec un verre dont la composition est identique à B, renforcé par un traitement de 17 jours à 350°C. La courbe 6 correspond au verre témoin A ayant été soumis à un traitement de 20 jours à 435°C - ce qui conduit à une profondeur totale échangée sensiblement identique. Le vitrage selon l'invention présente avantageusement un maximum de niveaux de contrainte de compression au voisinage immédiat de la surface du vitrage alors qu'au contraire, dans le cas du vitrage témoin, ce maximum est atteint pour des couches à une profondeur de 10-20 microns. Or, il est clair que les sollicitations auxquelles le vitrage est soumis sont essentiellement extérieures et qu'il importe donc d'avoir une contrainte de compression très élevée en surface. D'autre part, il importe de relever le niveau relativement faible des contraintes de compression obtenues avec le verre témoin A.

La figure 4 établit une autre comparaison, cette fois avec un autre verre dont la composition se prête également bien à un renforcement par voie chimique, mais avec une toute autre matrice qui implique le renforcement non plus des ions sodium par des ions potassium mais d'ions lithium par des ions sodium. Il est remarquable de noter que même si une telle autre composition permet l'obtention de produits dont la contrainte superficielle de compression et la profondeur échangée sont du même ordre de grandeur que dans le cas de l'invention, les produits selon l'invention se distinguent par un profil moins raide, la décroissance des niveaux de contraintes de compression observée pour les 50 premiers microns étant moins rapide.

Par ailleurs, il est apparu que les vitrages selon l'invention présentent une résistance très importante aux chocs avec des particules dures de petite taille du type gravillons qui peuvent venir en impact sur le vitrage au moment des phases de décollage ou d'atterrissage ou dans les phases de vol à proximité du sol pour les hélicoptères. A noter que le choc dû par exemple à un gravillon ne sollicite normalement pas le pare-brise dans toute son intégralité (comme cela peut être le cas pour un choc avec un oiseau en vol par exemple) mais peut conduire à des fissurations qui, si elles n'entraînent pas la ruine complète du vitrage, impliquent bien sûr son remplacement.

Pour estimer la résistance au gravillonnage, des éprouvettes d'essai sont placées perpendiculairement à l'axe de tir d'une bille d'acier de 1,6 mm de diamètre et d'une masse de 16,2 mg. L'ensemble de tir est tel qu'il permet de moduler la vitesse d'impact du projectile. Le tir effectué, on mesure la résistance à la rupture après impact, à partir d'un essai de flexion 4 points.

Pour des vitesses d'impact relativement faibles, la rupture du vitrage est due à une casse près des bords, et se produit pour un niveau de contrainte de rupture sensiblement constant quelle que soit la vitesse d'impact. Par contre, au-delà d'une certaine vitesse, dite vitesse de transition, la casse est observée au voisinage du point d'impact et surtout est obtenue pour des niveaux de contrainte très faibles, par exemple inférieurs à 50 MPa. La figure 2 montre l'allure typique de la courbe représentative de la valeur de la contrainte de rupture en flexion en fonction de la vitesse d'impact de la bille. Dans le cas d'un verre A ou B, non renforcé, la vitesse de transition est voisine de 15 m/sec. Après renforcement chimique, cette vitesse de transition est de l'ordre 45 m/sec pour le verre A et de 70 m/sec pour le verre B selon l'invention.

Les vitrages selon l'invention trouvent plus spécialement une application dans les vitrages composites tels que des pare-brise avions et plus généralement dans toutes les applications aéronautiques ou plus encore, dans toutes les applications usuelles des verres trempés et notamment pour des vitrages automobiles, vitrages blindés ou des vitrage de chemin de fer. Ils peuvent également être employés pour la fabrication de disques optiques numériques, application où il est recherché à la fois une très grande résistance mécanique et une grande planéité.

**Revendications**

**1.** Vitrage renforcé par échange d'ions superficiel sur une profondeur d'échange superficiel supérieure à 200 microns, présentant des contraintes de compression superficielles supérieures à 400 MPa, dont la matrice répond à une des compositions suivantes, exprimées en pourcentages pondéraux :

| | |
|---|---|
| $SiO_2$ | 65,0 à 76,0 % |
| $Al_2O_3$ | 1,5 à 5,0 % |
| $MgO$ | 4,0 à 8,0 % |
| $CaO$ | 0,0 à 4,5 % |
| $Na_2O$ | 10,0 à 18,0 % |
| $K_2O$ | 1,0 à 7,5 % |
| $B_2O_3$ | 0,0 à 4,0 % |

ces éléments représentant au moins 96% du poids du verre et respectant en outre les pourcentages pondéraux :

$$0 < CaO/CaO + MgO < 0,45 \text{ et } 0,05 < K_2O/Na_2O + K_2O < 0,35$$

**2.** Vitrage renforcé par échange d'ions superficiel sur une profondeur d'échange superficiel supérieure à 50 microns, présentant des contraintes de compression superficielles supérieures à 700 MPa, dont la matrice répond à une des compositions suivantes, exprimées en pourcentages pondéraux :

| | |
|---|---|
| $SiO_2$ | 65,0 à 76,0 % |
| $Al_2O_3$ | 1,5 à 5,0 % |
| $MgO$ | 4,0 à 8,0 % |
| $CaO$ | 0,0 à 4,5 % |
| $Na_2O$ | 10,0 à 18,0 % |
| $K_2O$ | 1,0 à 7,5 % |
| $B_2O_3$ | 0,0 à 4,0 % |

ces éléments représentant au moins 96% du poids du verre et respectant en outre les pourcentages pondéraux :

$$0 < CaO/CaO + MgO < 0,45 \text{ et } 0,05 < K_2O/Na_2O + K_2O < 0,35$$

**3.** Vitrage selon l'une des revendications 1 ou 2, *caractérisé en ce que* la teneur de la matrice en oxyde de bore est supérieure à 2%.

**4.** Vitrage selon la revendication 3, *caractérisé en ce que* la matrice répond à la composition suivante exprimée en pourcentages pondéraux :

| | |
|---|---|
| $SiO_2$ | 66,66 % |
| $Al_2O_3$ | 4,59 % |
| $MgO$ | 6,89 % |
| $Na_2O$ | 12,20 % |
| $KaO$ | 6,16 % |
| $B_2O_3$ | 3,44 % |

**5.** Vitrage selon l'une des revendications précédentes *caractérisé en ce qu*'il est obtenu par le procédé float de coulée sur un bain d'étain en fusion.

**6.** Procédé d'obtention d'un vitrage selon l'une des revendications précédentes, **caractérisé en ce que** le verre est formé dans une installation de type float et traité par échange d'ions potassium pendant une durée supérieure d'au moins 72 heures à une température comprise entre 350°C et 475°C.

**7.** Application du vitrage selon l'une des revendications 1 à 5 à la réalisation de vitrages composites feuilletés aéronautiques.

**8.** Application du vitrage selon l'une des revendications 1 à 5 à la réalisation de disques optiques numériques.

9. Application du vitrage selon l'une des revendications 1 à 5 à la réalisation de vitrages automobiles, de vitrages pour véhicules de chemin de fer ou de vitrages blindés.

**Patentansprüche**

1. Glasscheibe, die durch Oberflächenionenaustausch über eine Oberflächenaustauschtiefe von mehr als 200 Mikrometern verfestigt ist und Oberflächendruckspannungen von über 400 MPa aufweist und deren Matrix eine der folgenden, in Gewichtsprozenten ausgedrückten Zusammensetzungen

| $SiO_2$ | 65,0 bis 76,0 %, |
|---|---|
| $Al_2O_3$ | 1,5 bis 5,0 %, |
| $MgO$ | 4,0 bis 8,0 %, |
| $CaO$ | 0,0 bis 4,5 %, |
| $Na_2O$ | 10,0 bis 18,0 %, |
| $K_2O$ | 1,0 bis 7,5 %, |
| $B_2O_3$ | 0,0 bis 4,0 %, |

besitzt, wobei diese Elemente mindestens 96 Gew.-% des Glases ausmachen und außerdem den Gewichtsprozentverhältnissen $0 < CaO/CaO + MgO < 0,45$ und $0,05 < K_2O/Na_2O + K_2O < 0,35$ gehorchen.

2. Glasscheibe, die durch Oberflächenionenaustausch über eine Oberflächenaustauschtiefe von mehr als 50 Mikrometern verfestigt ist und Oberflächendruckspannungen von über 700 MPa aufweist und deren Matrix eine der folgenden, in Gewichtsprozenten ausgedrückten Zusammensetzungen

| $SiO_2$ | 65,0 bis 76,0 %, |
|---|---|
| $Al_2O_3$ | 1,5 bis 5,0 %, |
| $MgO$ | 4,0 bis 8,0 %, |
| $CaO$ | 0,0 bis 4,5 %, |
| $Na_2O$ | 10,0 bis 18,0 %, |
| $B_2O_3$ | 0,0 bis 4,0 %, |

besitzt, wobei diese Elemente mindestens 96 Gew.-% des Glases ausmachen und außerdem den Gewichtsprozentverhältnissen $0 < CaO/CaO + MgO < 0,45$ und $0,05 < K_2O/Na_2O + K_2O < 0,35$ gehorchen.

3. Glasscheibe nach einem der Ansprüche 1 oder 2, **dadurch gekennzeichnet, dass** der Boroxidgehalt der Matrix über 2 % liegt.

4. Glasscheibe nach Anspruch 3, **dadurch gekennzeichnet, dass** die Matrix folgende, in Gewichtsprozenten ausgedrückte Zusammensetzung besitzt:

| $SiO_2$ | 66,66 % |
|---|---|
| $Al_2O_3$ | 4,59 % |
| $MgO$ | 6,89 % |
| $Na_2O$ | 12,20 % |
| $K_2O_3$ | 6,16 % und |
| $B_2O_3$ | 3,44 %. |

5. Glasscheibe nach einem der vorhergehenden Ansprüche, **dadurch gekennzeichnet, dass** sie durch das Floatverfahren mittels Gießen auf ein Bad aus geschmolzenem Zinn hergestellt ist.

6. Verfahren zur Herstellung einer Glasscheibe nach einem der vorhergehenden Ansprüche, **dadurch gekennzeichnet, dass** das Glas in einer Floatglasanlage gebildet und durch einen mindestens mehr als 72 Stunden dauernden Austausch von Kaliumionen bei einer Temperatur von 350 bis 475 °C behandelt wird.

**7.** Verwendung der Glasscheibe nach einem der Ansprüche 1 bis 5 zur Herstellung von Verbundverglasungen für die Luftfahrt.

**8.** Verwendung der Glasscheibe nach einem der Ansprüche 1 bis 5 zur Herstellung digitaler optischer Speicherplatten.

**9.** Verwendung der Glasscheibe nach einem der Ansprüche 1 bis 5 zur Herstellung von Verglasungen für Kraftfahrzeuge und Schienenfahrzeuge oder von Panzerglasscheiben.

**Claims**

**1.** Glazing pane reinforced by surface ion exchange over a surface exchange depth greater than 200 microns, having surface compressive stresses greater than 400 MPa, the matrix of which complies with one of the following compositions, expressed in percentages by weight:

| | |
|---|---|
| $SiO_2$ | 65.0 to 76.0% |
| $Al_2O_3$ | 1.5 to 5.0% |
| $MgO$ | 4.0 to 8.0% |
| $CaO$ | 0.0 to 4.5% |
| $Na_2O$ | 10.0 to 18.0% |
| $K_2O$ | 1.0 to 7.5% |
| $B_2O_3$ | 0.0 to 4.0% |

these elements representing at least 96% of the weight of the glass and also complying with the percentages by weight:

$$0 < CaO/CaO + MgO < 0.45 \text{ and } 0.05 < K_2O/Na_2O + K_2O < 0.35.$$

**2.** Glazing pane reinforced by surface ion exchange to a surface exchange depth greater than 50 microns, having surface compressive stresses greater than 700 MPa, the matrix of which complies with one of the following compositions, expressed in percentages by weight:

| | |
|---|---|
| $SiO_2$ | 65.0 to 76.0% |
| $Al_2O_3$ | 1.5 to 5.0% |
| $MgO$ | 4.0 to 8.0% |
| $CaO$ | 0.0 to 4.5% |
| $Na_2O$ | 10.0 to 18.0% |
| $K_2O$ | 1.0 to 7.5% |
| $B_2O_3$ | 0.0 to 4.0% |

these elements representing at least 96% of the weight of the glass and complying, in addition, with the percentages by weight:

$$0 < CaO/CaO + MgO < 0.45 \text{ and } 0.05 < K_2O/Na_2O + K_2O < 0.35.$$

**3.** Glazing pane according to one of Claims 1 or 2, **characterised in that** the boron oxide content of the matrix is greater than 2%.

**4.** Glazing pane according to Claim 3, **characterised in that** the matrix complies with the following composition expressed in percentages by weight:

| | |
|---|---|
| $SiO_2$ | 66.66% |

(continued)

| | |
|---|---|
| $Al_2O_3$ | 4.59% |
| MgO | 6.89% |
| $Na_2O$ | 12.20% |
| $K_2O$ | 6.16% |
| $B_2O_3$ | 3.44%. |

5. Glazing pane according to one of the preceding claims, **characterised in that** it is obtained by the casting float process on a bath of molten tin.

6. Method of obtaining a glazing pane according to one of the preceding claims, **characterised in that** the glass is formed in an installation of the float type and treated by potassium ion exchange for a period greater than at least 72 hours at a temperature of between 350°C and 475°C.

7. Application of the glazing pane according to one of Claims 1 to 5 to the production of aeronautical laminated composite glazing panes.

8. Application of the glazing pane according to one of Claims 1 to 5 to the production of digital optical discs.

9. Application of the glazing pane according to one of Claims 1 to 5 to the production of automobile glazing panes, glazing panes for railway vehicles or armoured glazing panes.

FIG_1

FIG_2

FIG.3

FIG.4